# FASCICULE DE BREVET EUROPEEN

(11) **EP 3 648 565 B1**
(45) Date de publication et mention de la délivrance du brevet: **01.09.2021**
(21) Numéro de dépôt: 18734262.1
(22) Date de dépôt: 04.07.2018
(51) Int. Cl.: A01C 1/02, A01G 31/06

(54) **PROCÉDÉ DE CONTRÔLE DE LA GERMINATION DE GRAINES ET DISPOSITIF DE GERMINATION**
VERFAHREN ZUR KONTROLLE DER KEIMUNG VON SAMEN UND KEIMVORRICHTUNG
METHOD FOR CONTROLLING THE GERMINATION OF SEEDS AND GERMINATION DEVICE

(30) Priorité: 04.07.2017 FR 1756286
(43) Date de publication de la demande: 13.05.2020
(73) Titulaire: Peyrard, Cinitia, Anaïs, 30360 St Maurice de Cazevieille (FR)
(72) Inventeur: Peyrard, Cinitia, Anaïs, 30360 St Maurice de Cazevieille (FR)
(74) Mandataire: Cornuejols, Georges
(86) Numéro de dépôt international: PCT/EP2018/068113
(87) Numéro de publication internationale: WO 2019/008050

(56) Documents cités:
- DE-C1- 4 411 226
- DE-U1-202006 016 559
- DE-U1-202016 104 616
- FR-A1- 2 660 148

## Description

### DOMAINE DE L'INVENTION

L'invention concerne le domaine de la germination de graines.

Plus particulièrement, l'invention porte sur des procédés de contrôle de la germination de graines disposées dans un germoir.

### ARRIERE-PLAN TECHNOLOGIQUE

La consommation de graines germées suscite un intérêt croissant. Recommandées pour leurs bienfaits diététiques, ces aliments riches en vitamines offrent même l'avantage de pouvoir être produits à domicile. La renommée de la germination pousse également des industriels à s'intéresser de près à leur commercialisation.

Quelle que soit l'échelle de production, la germination est un processus naturel dont le contrôle est sensible. Chaque famille de graines possède en effet des besoins qui lui sont propres, notamment en termes de température, d'hygrométrie, et d'oxygénation. Il est donc nécessaire de pouvoir contrôler l'environnement de l'enceinte de germination.

De nombreux germoirs ont ainsi été développés. Ces dispositifs s'appuient notamment sur des procédés de culture tels que l'hydroponie ou l'aéroponie. De manière générale, par exemple dans des dispositifs horticoles, lorsque que des plantes sont cultivées en hydroponie, les racines sont emprises dans un substrat inerte irrigué en eau et nutriments. De même, lorsque des plantes sont cultivées en aéroponie, leurs racines sont exposées à l'air libre, et reçoivent directement, par dispersion aérosol, l'eau et les nutriments nécessaire à leur métabolisme.

Dans la plupart des dispositifs de germination, les graines sont disposées dans des compartiments, ou bacs, et sont soumises directement à une dispersion aérosol, puisque leurs racines sont faiblement développées, de manière similaire à l'aéroponie. Ces bacs sont agencés dans une enceinte confinée et ventilée. Les graines sont humidifiées, en permanence ou à intervalles de temps donnés, au moyen de dispositifs de dispersion projetant de l'eau sous forme de gouttelettes. Certains germoirs disposent également de dispositifs additionnels de contrôle de l'oxygénation des graines et/ou de la température de l'enceinte de germination.

Jusqu'à présent, il n'a cependant pas été proposé de germoirs adaptés pour la germination de graines dont les besoins diffèrent les unes des autres. En effet, les dispositifs de l'art antérieur ne prennent pas en compte les disparités de température et d'hygrométrie de germination selon le type de graine. Ceci peut notamment entraîner le pourrissement ou le dessèchement de certaines graines et/ou la non-germination d'autres graines. De plus, les dispositifs proposés jusqu'alors ne peuvent être mis en œuvre qu'à une échelle de production donnée. Enfin, les dispositifs de l'art antérieur demandent des modifications importantes pour pouvoir être mis en œuvre dans des environnements climatiques différents, par exemple entre un pays tempéré et un pays tropical.

Il existe donc un besoin d'un procédé de contrôle de la germination de graines au sein d'un dispositif de germination, type germoir, qui permette de faire germer plusieurs variétés de graines différentes, tout en pouvant être mis en œuvre à toutes les échelles de production, et dans tous les environnements climatiques.

Le document DE202016104616 décrit une unité de conditionnement de graines préassemblée pour équiper un germoir automatique, en particulier pour l'élevage de pousses et / ou de plants et un germoir automatique pour des denrées alimentaires susceptibles de germer. Ce document est basé sur la connaissance qu'une graine ne doit pas être conditionnée séparément et doit être saupoudrée manuellement sur un porte-graines par un utilisateur d'un germoir lors du démarrage d'une culture. La graine est reçue dans un moule à graines qui fait partie d'une unité de conditionnement de graines préassemblée que l'utilisateur manipule dans son ensemble. Cela libère l'utilisateur de la tâche de déterminer lui-même une certaine densité de semence ou une certaine épaisseur de couche de semence, qui sont déjà préréglés dans l'unité de conditionnement préassemblée.

### RESUME DE L'INVENTION

Un objectif de l'invention est de proposer un procédé de contrôle de la germination qui puisse être mis en œuvre dans des germoirs de n'importe quelle taille.

Un autre objectif est de pouvoir faire germer toutes les graines propres à la consommation au moyen du même procédé de contrôle.

Un autre objectif de l'invention est de proposer un procédé pouvant être mis en œuvre dans des germoirs simplifiés.

Un autre objectif de l'invention est de faire germer des graines dont l'hygiène est améliorée en vue de garantir la sécurité sanitaire d'un consommateur.

Pour cela, l'invention propose un dispositif selon la revendication 1.

L'invention propose aussi un procédé de contrôle de la germination de graines au sein d'un germoir, ledit germoir comprenant : une enceinte confinée définie par des parois, au moins un bac amovible s'étendant à l'intérieur de l'enceinte, ledit bac étant configuré pour accueillir des graines, une buse d'atomisation configurée pour disperser, dans l'enceinte, alternativement un mélange eau-air sous forme de gouttelettes, ou de l'air seul, une unité de contrôle configurée pour mettre en œuvre une étape consistant à déterminer, à partir de paramètres ambiants au germoir, d'informations relatives à la quantité, au type de graines à germer, et à leur emplacement respectif au sein de l'enceinte, et de paramètres de germination propres à la germination des graines à germer dans ladite enceinte, des paramètres de commande de la buse d'atomisation de manière à obtenir, dans l'enceinte, un environnement propice à la germination des graines, lesdits paramètres de commande comprenant une fréquence de dispersion, par la buse d'atomisation, du mélange eau-air sous forme de gouttelettes, et une fréquence de dispersion d'air.

Grâce à un tel dispositif et à un tel procédé, différents types de graines peuvent germer au sein d'une enceinte de germoir présentant un environnement optimal. En effet, la dispersion alternée et fréquente d'un mélange d'eau et d'air, et d'air seul, permet d'une part d'irriguer et d'oxygéner les graines germées. D'autre part, cette dispersion permet d'évacuer le dioxyde de carbone produits par le processus de germination, tout en modérant la chaleur développée par un tel processus. Enfin la fréquence de cette distribution permet de réguler la température par échange thermique.

Certaines caractéristiques préférées mais non limitatives du procédé décrit ci-dessus sont les suivantes, prises individuellement ou en combinaison :
- les paramètres de commande déterminés comprennent également la durée respectivement de chaque dispersion du mélange eau-air, et de chaque dispersion d'air,
- les paramètres de commandes déterminés comprennent également un réglage de la buse d'atomisation de manière à déterminer la taille des gouttelettes dispersées,
- les paramètres de germination comprennent la température et l'hygrométrie à l'intérieur de l'enceinte,
- les paramètres ambiants au germoir comprennent la densité d'humidité et la température à l'extérieur du germoir,
- le germoir comprend plusieurs bacs, et l'information relative à la quantité de graines à germer comprend la taille de l'enceinte, le nombre de bacs, et la surface de chaque bac, et
- il comprend en outre une étape de contrôle de l'état de germination des graines.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue schématique d'un exemple de réalisation d'un germoir au sein duquel un exemple de réalisation du procédé de contrôle de germination selon l'invention peut être mis en œuvre,
Les figures 2 illustre schématiquement un exemple de réalisation d'un bac amovible pouvant être disposé au sein d'un germoir, et ainsi accueillir des graines à germer,
La figure 3 est une vue de dessus schématique d'une extrémité de buse d'atomisation pouvant s'étendre au sein d'un germoir, et
La figure 4 est diagramme fonctionnel d'un exemple de réalisation du procédé de contrôle de germination selon l'invention.

### DESCRIPTION DETAILLEE D'UN MODE DE REALISATION

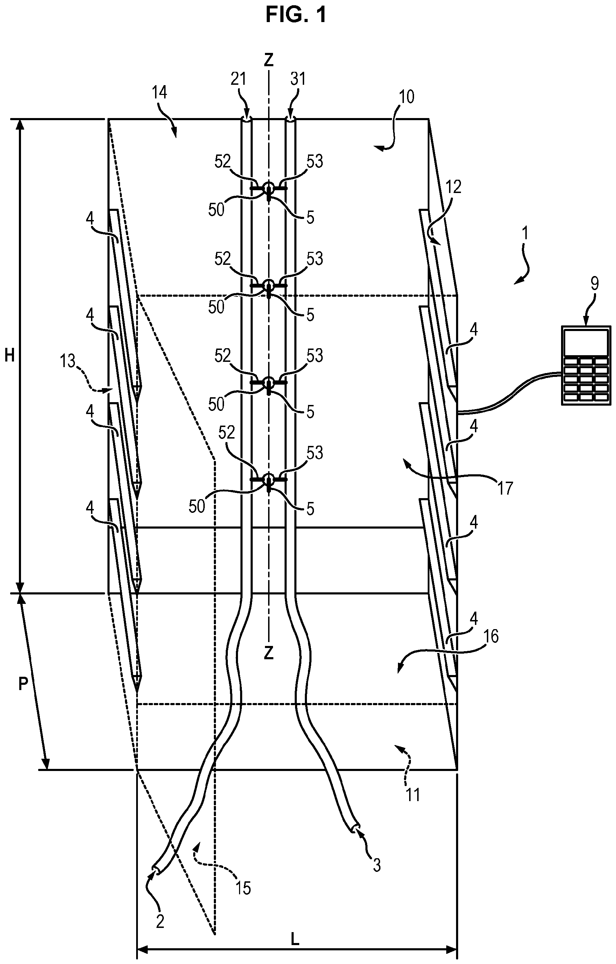

En relation avec la figure 1, un dispositif de germination de graines 1, ou germoir, est parallélépipédique rectangle. Il est doté d'une porte 15, d'un sol 11, d'un plafond 10, d'un côté droit 12 et d'un côté gauche 13, et d'un fond 14, qui définissent une enceinte 17 confinée. Le volume du germoir 1 est caractérisé par une hauteur H, une profondeur P et une largeur L.

Ceci n'est cependant pas limitatif puisque le germoir 1 peut prendre n'importe quelle forme quelconque définissant une enceinte confinée 17 comprenant un ensemble de parois reliées les unes autres de sorte à ménager un espace intérieur, accessible par une ouverture pratiquée dans une paroi de l'enceinte 17. L'enceinte 17 peut donc prendre n'importe quelle forme et occuper n'importe quel volume dans l'espace, suivant la quantité de graines germées à produire ou la production visée (domestique ou industrielle).

Sur chacun des côtés 12, 13 sont disposés des rails 4 s'étendant selon la profondeur P, à égale distance les uns des autres selon la hauteur H du germoir 1. Ces rails 4 sont agencés par paire de rails 4 en regard l'un de l'autre sur chacun des côtés 12, 13. Ces rails 4 sont configurés pour servir d'appui à des bacs 7 amovibles pouvant s'étendre à l'intérieur du germoir 1. Avantageusement, comme visible par exemple sur la figure 1, les rails 4 se présentent sous forme de baguettes d'angles fixées sur chacun des côtés 12, 13 du germoir 1, à des hauteurs égales au sein d'une même paire de rails 4, et séparés les unes des autres, sur un même côté, d'une distance égale à la hauteur d'un bac 7, à laquelle vient s'ajouter une hauteur qui dépend de la hauteur des graines disposées dans le bac 7, une fois germées. A titre d'exemple non limitatif, les bacs 7 ainsi disposés sur les rails 4, sont séparés les uns des autres d'une distance comprise entre 1 et 3 cm. De manière encore plus avantageuse, les rails 4 peuvent être inclinés par rapport à un plan orthogonal à chacun des plans définis par les côtés 12, 13 du germoir 1. Cette légère inclinaison permet de faciliter la percolation de l'eau d'irrigation des graines, par gravité. De manière optionnelle, le rail 4 disposé le plus proche du fond 10 est situé à une distance telle dudit fond 10 qu'un espace formant réservoir 16 est ménagé pour accueillir l'eau percolant lorsque les graines disposées dans les bacs sont irriguées. De manière avantageuse, l'eau ayant irrigué un bac 7 donné percole directement vers le réservoir 16, sans traverser les bacs 7 inférieurs au bac 7 donné. Cette eau est ensuite évacuée par des moyens configurés à cet effet, pour éviter de polluer l'atmosphère contenue à l'intérieur de l'enceinte 17. Ceci garantit une hygiène optimale des graines, et améliore la sécurité sanitaire pour le consommateur. En effet, l'eau ayant irrigué les graines du bac 7 donné sont chargées en enzymes impropres à la digestion humaine. De manière générale, l'intérieur de l'enceinte 17 est structurée de sorte à optimiser l'espace occupé par les bacs 7, et ainsi la quantité de graines à produire.

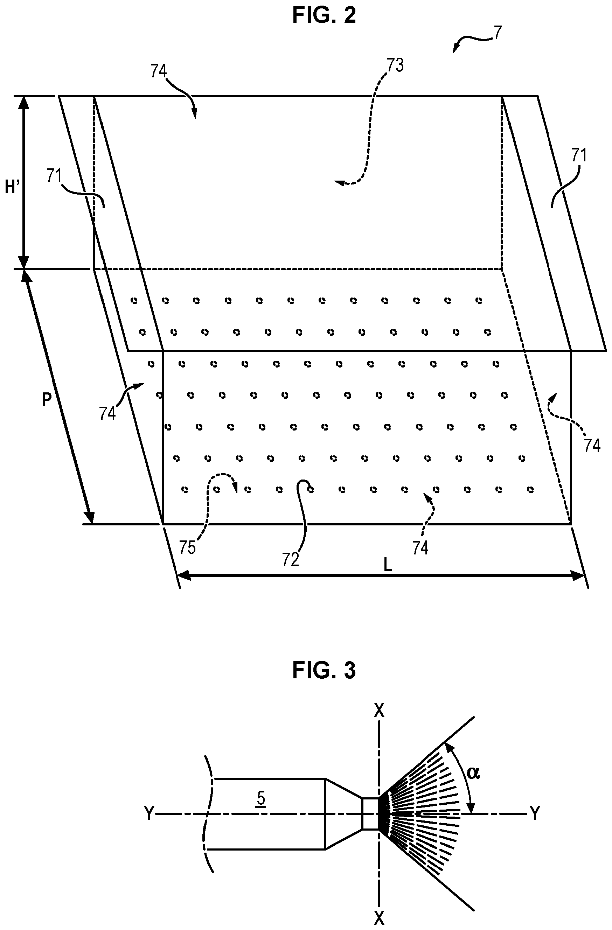

Comme illustré sur la figure 2, chaque bac 7 est également de forme parallélépipédique rectangle et présente la même profondeur P, et la même largeur L que le germoir 1. Il présente néanmoins une hauteur H' inférieure à H. Avantageusement, les bacs 7 présentent tous la même hauteur H' répondant à des critères de standardisation déterminés. Il comprend une paroi de fond 75 percé de multiples ouvertures 72 de dimensions suffisamment faibles pour ne pas laisser les graines s'échapper ou les racines croître, mais suffisamment large pour permettre l'évacuation d'eau d'irrigation. Il comprend également des rebords 74 définissant, avec la paroi de fond 75, un réceptacle 73 configuré pour accueillir des graines à germer. Chaque bac comprend enfin deux languettes 71 s'étendant depuis les extrémités des rebords 74 s'étendant selon la profondeur P. Ces languettes sont configurées pour coopérer avec les rails 4 du germoir 1 afin de servir d'appui aux bacs 7.

Alternativement, les bacs 7 peuvent prendre n'importe quelle forme tridimensionnelle permettant aux bacs 7 de s'étendre à l'intérieur de l'enceinte 17. En tout état de cause, les bacs 7 comprennent un fond 75 et des rebords 74 de sorte à ménager un réceptacle 73 pour accueillir les graines à germer. De manière générale le nombre, la forme et la disposition de bacs 7 à l'intérieur du germoir 1 dépendent du type de graines utilisé et de la quantité de graines germées que l'on souhaite produire. Avantageusement, chacun des bacs 7 reçoit un ou plusieurs types donnés de graines.

Comme cela est visible sur la figure 1, la porte 15 est apte à pivoter sur un système de charnières, par exemple un ensemble de gonds, fixés sur l'un ou l'autre des côtés du germoir 1. En position ouverte, la porte 15 permet d'accéder à l'intérieur de l'enceinte 17, par exemple pour retirer ou disposer des bacs 7 à l'intérieur de l'enceinte 17. En position fermée, la porte 15 assure le confinement de l'enceinte 17. Avantageusement, une paroi 15, par exemple la porte 15, peut comprendre un matériau translucide, de sorte à permettre l'observation de l'intérieur de l'enceinte 17. Cette caractéristique peut notamment s'avérer utile dans un procédé de contrôle E de la germination de graines, afin de s'assurer que toutes les graines germent, sans qu'aucune ne pourrisse.

Un ensemble d'ouvertures 50 est pratiqué dans le fond 14. Des buses d'atomisation 5 s'étendent à travers ces ouvertures de sorte à déboucher dans l'enceinte 17. Avantageusement, les ouvertures 50 sont toutes alignées selon un axe Z-Z qui s'étend selon la hauteur parallèlement aux arrêtes du fond 14. Les ouvertures 50 sont chacune pratiquées à une hauteur du sol légèrement supérieure à une paire de rails 4 auxquelles elles correspondent respectivement. De manière privilégiée, le fond du germoir 1 présente autant d'ouvertures 50 qu'il y a de paires de rails 4 aptes à recevoir un bac 7.

Comme cela est visible sur la figure 3, en fonctionnement, une buse 5 dispersent alternativement un mélange eau/air sous forme de microgouttelettes ou de l'air seul dans une direction Y-Y substantiellement orthogonale à l'axe Z-Z. Par microgouttelettes, on comprend que les particules formant le mélange air-eau ont une taille typiquement de l'ordre du micromètre. De plus, le faisceau de dispersion s'ouvre suivant un angle d'ouverture α configuré pour que les gouttelettes ou l'air dispersés couvrent toute la surface supérieure du réceptacle 73 du bac 7 se trouvant en-dessous de la buse 5. Avantageusement, l'angle d'ouverture α est compris entre 0° et 90°, de préférence entre 30° et 60°, et vaut par exemple 45°. En option, la tête de buse 5 présente une forme substantiellement conique de révolution, autour de l'axe Y-Y. Avantageusement, chaque ouverture 50 est pratiquée à une hauteur telle que la dispersion des gouttelettes ou de l'air couvre toute la surface supérieure du réceptacle du bac 7 situé en dessous de l'ouverture 50. Le fonctionnement de ce type de buse 5, sur le principe de l'effet Venturi, est classique et connu de l'homme de l'art, et ne sera donc pas détaillé. Il est simplement rappelé qu'une buse d'atomisation 5 présente l'avantage de pouvoir disperser alternativement un mélange air/eau ou air seul, de manière pilotable.

En référence de nouveau à la figure 1, chaque buse 5 est reliée 52, 53 respectivement à un circuit d'alimentation en air 2, et à un circuit d'alimentation en eau 3. Ces circuits 2, 3 peuvent fonctionner en boucle fermée, ou en boucle ouverte, sur des systèmes d'alimentation, électriques ou non, communs ou indépendants l'un de l'autre, suivant les besoins et les capacités de l'utilisateur. De plus, le circuit d'alimentation en eau 3 peut comprendre un dispositif de mise en circulation de nutriments nécessaires à la croissance de la graine. En tout état de cause, chacun de ces circuits 2, 3 dispose d'un conduit 21, 31 s'étendant à l'extérieur du germoir 1 propre à faire cheminer de l'eau ou de l'air. Comme visible sur la figure 1, ces circuits comprennent par exemple chacun un canal 21, 31 disposés à l'extérieur de l'enceinte 17, contre le fond 14, et s'étendent parallèlement à l'axe Z-Z. Chaque buse 5 est alors reliée par dérivation aux conduits 2, 3 d'où il lui est possible d'extraire de l'eau ou de l'air.

Le circuit d'alimentation en air 2 peut avantageusement être relié à un compresseur (non représenté). Le circuit d'alimentation en eau 3 peut quant à lui être relié à une source d'eau (non représentée).

Avantageusement, le germoir 1 comporte un ou plusieurs capteur(s) (non représentés) configurés pour fournir une information relative à la température et/ou l'hydrométrie et/ou l'hygrométrie et/ou l'oxygénation à l'intérieur de l'enceinte du germoir 1. Alternativement, la température et/ou l'hydrométrie et/ou l'hygrométrie et/ou l'oxygénation à l'intérieur de l'enceinte du germoir 1 sont fournis par un modèle disposant des données météorologiques du lieu de production.

De manière optionnelle, le germoir 1 comprend un système de ventilation, pilotable ou non, configuré pour renouveler tout ou partie de l'air à l'intérieur de l'enceinte 17.

En tout état de cause, le germoir est relié à une unité de contrôle 9 comprenant un ensemble de modules configurés pour mettre en œuvre un procédé de contrôle E de la germination de graines au sein du germoir 1. Avantageusement, cette unité de contrôle comprend une mémoire adaptée pour charger un ensemble de paramètres, comme par exemple les paramètres de commande utilisés par le procédé de contrôle E.

La germination est un processus naturel complexe affectant toutes les familles de graines. On entend par « graine » tout type d'ovule végétal à partir de laquelle une plante peut être cultivée. Ce stade de développement d'une plante touche les graines disposées dans un environnement (notamment en température et hygrométrie) adéquat, consomme notamment de l'eau et de l'oxygène, et produit de la chaleur et du dioxyde de carbone.

Chaque type de graine possède des propriétés et un environnement de germination différents. L'alimentation en eau et en oxygène, et l'évacuation de la chaleur et du dioxyde de carbone sont des paramètres essentiels dans le contrôle de la germination. En effet, une mauvaise évacuation du dioxyde de carbone ou de la chaleur produites par un type de graine peut entraîner le pourrissement ou l'étouffement d'un autre type de graine, dont la germination est par exemple plus lente que le premier type. De même, un rythme d'irrigation et d'oxygénation d'un type de graine peut entraîner le pourrissement ou la mort d'autres types de graine dont le processus germination nécessiterait par exemple moins d'eau et moins d'air.

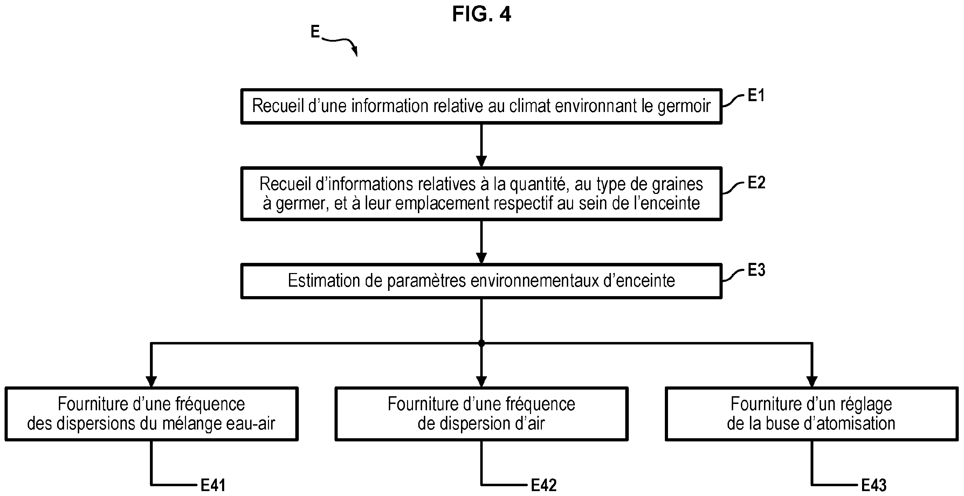

En référence à la figure 4, on va maintenant décrire plus en détails un mode de réalisation d'un procédé de contrôle E de la germination de graines au sein d'un germoir 1 tel que précédemment décrit.

Un tel procédé de contrôle consiste en la détermination de paramètres de commande de la buse d'atomisation 5 de manière à obtenir, dans l'enceinte 17 du germoir 1, un environnement propice à la germination des graines.

Cette détermination est mise en œuvre par l'unité de contrôle 9 à partir d'un ensemble de paramètres parmi lesquels : des paramètres ambiants au germoir 1, des informations relatives à la quantité et au type de graines à germer, ainsi qu'à leur emplacement respectif au sein de l'enceinte 17, et des paramètres de germination propres à la germination des graines à germer dans l'enceinte 17.

Les paramètres de commande sont déterminés à partir de paramètres ambiants au germoir car l'enceinte 17 du germoir 1 est confinée, mais n'est cependant pas totalement hermétique. La connaissance E1 de paramètres ambiants au germoir 1 est alors essentiel à la qualité du contrôle de la germination. En effet, le climat environnant influe sur le processus de germination. A cet égard, des graines produites dans un environnement domestique posséderont des propriétés de germination différentes de graines produites dans un environnement industriel, par exemple un hangar extérieur. Il en est de même pour des graines produites dans un environnement tropical par rapport à des graines produites dans un environnement tempéré. La Demanderesse a par exemple constaté que la fréquence de dispersion d'air en milieu tropical devait être supérieure à celle en milieu tempéré afin d'évacuer le surplus de chaleur lié à l'atmosphère environnant le germoir. Avantageusement, les paramètres ambiants au germoir 1 comprennent un taux d'humidité de l'atmosphère au sein duquel le germoir 1 est placé, ainsi que la température environnant le germoir 1. Cette température peut être fournie E1 par des capteurs disposés à l'extérieur du germoir 1, et configurés à cet égard ou, en variante, fournie E1 par un modèle météorologique.

La quantité, le type de graines à germer, et leur emplacement respectif au sein de l'enceinte 17 de germoir 1 sont des paramètres essentiels à l'optimisation de l'environnement à l'intérieur de l'enceinte. Les mouvements de convection d'air chaud, plus ou moins chargé en humidité, à l'intérieur de l'enceinte 17, peuvent par exemple influer sur l'environnement au sein de l'enceinte 17. En fonction de l'emplacement, de la quantité et du type des graines à germer, l'environnement de germination optimal va évoluer. Il est donc nécessaire d'adapter les paramètres de commande de buse 5 en conséquence. Les informations relatives à la quantité, au type de graines à germer, et à leur emplacement respectif au sein de l'enceinte de germoir, peuvent être fournies directement par l'utilisateur E2 au début du cycle de germination. En variante, la quantité de graines produites est évaluée E2 par l'unité de contrôle 9 à partir de la taille de l'enceinte 17, du nombre de bacs 7 et de la surface de chaque bac 7.

Les paramètres de germination propres à la germination des graines à germer dans l'enceinte 17 constituent les paramètres influençant directement le processus de germination. Leur suivi influe sur la commande des buses d'atomisation 5 afin de garantir en permanence un environnement propice à tous les types de graines. A cet égard, de tels paramètres de germination comprennent la température et l'hygrométrie à l'intérieur de l'enceinte 17. Dans un mode privilégié du procédé de contrôle E, il n'est pas nécessaire de connaître à tout instant la température à l'intérieur de l'enceinte 17. Le procédé E prévoit de maintenir une température à l'intérieur de l'enceinte 17 à partir d'une température donnée, par exemple la température extérieure, qui peut être fournie par l'utilisateur, ou préenregistrée. Alternativement, le procédé de contrôle E prévoit de disposer d'une information relative à la température au sein de l'enceinte.

La détermination des paramètres de commande de buse 5 se fait de manière empirique. A cet égard, le procédé de contrôle E peut prévoir une étape de contrôle visuel des graines. Cette étape peut être mise en œuvre par un prestataire extérieur ou tout professionnel habilité à manipuler le germoir 1 dans le respect des réglementations sanitaires. Cette étape sert de validation au procédé de contrôle E, et le cas échéant peut aboutir à une modification des paramètres de commande. Le contrôle visuel peut être effectué directement, ou au moyen d'un dispositif d'enregistrement vidéo, comme par exemple une caméra, disposé à l'extérieur ou à l'intérieur de l'enceinte 17, de sorte à fournir des images en temps réel des graines en germination. Alternativement, les paramètres de commande peuvent être préenregistrés ou préchargés au sein de la mémoire de l'unité de contrôle 9.

Les paramètres de commande de buse 5 permettent à l'unité de contrôle 9 de piloter le comportement des buses 5 en vue de garantir E3 un environnement de germination optimal pour chacun des types de graines disposés dans l'enceinte 17 de germoir 1. Il est en effet nécessaire de contrôler la température au niveau de chacun des bacs 7 de production, mais aussi l'oxygénation des graines et la dissipation du dioxyde de carbone et de la chaleur produits.

A cet égard, l'unité de contrôle 9 détermine des paramètres de commande comprenant une fréquence de dispersion E41, par la buse d'atomisation 5, du mélange eau-air sous forme de gouttelettes, et une fréquence de dispersion d'air E42, la durée respectivement de chaque dispersion du mélange eau-air, et de chaque dispersion d'air, et un réglage E43 de la buse d'atomisation 5 de manière à déterminer la taille des gouttelettes dispersées. Ce réglage peut comprendre la détermination de la taille et/ou la forme de la buse d'atomisation 5, ainsi que la pression et le débit d'air et d'eau dans le circuit d'alimentation 2, 3 des buses d'atomisation 5.

Afin de réguler la température, l'eau est dispersée par impulsions brèves, à une fréquence déterminée par l'unité de contrôle 9 à partir des paramètres de commande déterminés, et sous forme de gouttelettes suffisamment fines. Pour cela, l'eau est mélangée à de l'air à l'intérieur de la buse d'atomisation 5. Avantageusement, la tête conique de buse 5 permet d'accélérer le mélange eau-air en sortie de buse 5, ce qui permet de former la brume de gouttelettes dispersées. La vaporisation partielle des gouttelettes permet de capter la chaleur dégagée par le processus de germination et de maintenir, à tout instant, la température locale idéale pour les graines. A cet égard, la maîtrise de la finesse des gouttelettes permet d'influence la performance et la rapidité de l'échange thermique. Cette caractéristique permet de s'affranchir de la nécessité de disposer d'un dispositif de régulation de la température en plus du dispositif d'irrigation, comme usuellement dans les germoirs de l'art antérieur. Le dispositif d'irrigation, en l'occurrence les buses d'atomisation 5, assure en effet les deux fonctions. Par ailleurs, la finesse des gouttelettes autorise une absorption plus efficace des particules dispersées par les racines des graines en germination. C'est la raison pour laquelle le réglage de la buse d'atomisation de manière à déterminer la taille des gouttelettes dispersées influe sur la qualité de l'environnement au sein de l'enceinte.

La dispersion d'air seul permet l'oxygénation optimale des graines germées, mais aussi l'évacuation du dioxyde de carbone produit lors de la germination. La fréquence et la durée de ces dispersions doivent donc être fournies pour assurer un environnement optimal d'hygrométrie pour les graines, et éviter que certaines ne pourrissent, ou d'autres ne germent pas. Avantageusement, on veillera à ce que la fréquence de dispersion soit la plus élevée possible, relativement à la quantité de graines à germer, de sorte à contrôler en permanence l'environnement de germination. L'alternance de dispersion entre le mélange eau-air et l'air seul assure un environnement optimal de germination.

## Revendications

1. Dispositif de germination de graines, ou germoir (1), comprenant une enceinte (17) définie par des parois (10, 11, 12, 13, 14, 15), au moins un bac amovible (7) s'étendant à l'intérieur de l'enceinte (17), ledit bac (7) étant configuré pour accueillir des graines, une buse d'atomisation (5) configurée pour disperser, dans l'enceinte (17), alternativement un mélange eau-air sous forme de gouttelettes, ou de l'air seul, et une unité de contrôle (9) de la germination de graines au sein du germoir (1) comprenant un ensemble de modules configuré pour mettre en oeuvre une étape consistant à déterminer, à partir de paramètres ambiants au germoir (1), d'informations relatives à la quantité, au type de graines à germer, et à leur emplacement respectif au sein de l'enceinte (17), et de paramètres de germination propres à la germination des graines à germer dans ladite enceinte (17), des paramètres de commande de la buse d'atomisation (5) de manière à obtenir, dans l'enceinte (17), un environnement propice à la germination des graines, lesdits paramètres de commande comprenant une fréquence de dispersion, par la buse d'atomisation (5), du mélange eau-air sous forme de gouttelettes, et une fréquence de dispersion d'air ;
**caractérisé en ce que** l'enceinte (17) est confinée et que le dispositif comprend en outre : un circuit d'alimentation en air (2) et un circuit d'alimentation en eau (3) ; la buse d'atomisation (5) étant reliée d'une part au circuit d'alimentation en air (2), et d'autre part au circuit d'alimentation en eau (3), la buse (5) étant disposée de sorte à ce qu'une portion de la buse (5) s'étende au sein de l'enceinte (17) et de sorte à disperser alternativement un mélange air-eau, ou de l'air seul, au niveau de la surface supérieure de l'espace réceptacle du bac (7).

2. Procédé de contrôle (E) de la germination de graines au sein d'un germoir (1) selon la revendication 1, qui comporte une étape consistant à déterminer, à partir de paramètres ambiants au germoir (1), d'informations relatives à la quantité, au type de graines à germer, et à leur emplacement respectif au sein de l'enceinte (17), et de paramètres de germination propres à la germination des graines à germer dans ladite enceinte (17), des paramètres de commande de la buse d'atomisation (5) de manière à obtenir, dans l'enceinte (17), un environnement propice à la germination des graines, lesdits paramètres de commande comprenant une fréquence de dispersion, par la buse d'atomisation (5), du mélange eau-air sous forme de gouttelettes, et une fréquence de dispersion d'air.

3. Procédé (E) selon la revendication 2, dans lequel, les paramètres de commande déterminés comprennent également la durée respectivement de chaque dispersion du mélange eau-air, et de chaque dispersion d'air.

4. Procédé (E) selon l'une des revendications 2 ou 3, dans lequel les paramètres de commandes déterminés comprennent également un réglage de la buse d'atomisation (5) de manière à déterminer la taille des gouttelettes dispersées.

5. Procédé (E) selon l'une des revendications 2 à 4, dans lequel les paramètres de germination comprennent la température et l'hygrométrie à l'intérieur de l'enceinte (17).

6. Procédé (E) selon l'une des revendications 2 à 5, dans lequel les paramètres ambiants au germoir (1) comprennent la densité d'humidité et la température à l'extérieur du germoir (1).

7. Procédé (E) selon l'une des revendications 2 à 6, dans lequel le germoir (1) comprend plusieurs bacs (7), et l'information relative à la quantité de graines à germer comprend la taille de l'enceinte (17), le nombre de bacs (7), et la surface de chaque bac (7).

8. Procédé (E) selon l'une des revendications 2 à 7, comprenant en outre une étape de contrôle de l'état de germination des graines.

## Patentansprüche

1. Vorrichtung zum Keimen von Saat oder Keimapparat (1), umfassend eine Einfassung (17), die von Wänden (10, 11, 12, 13, 14, 15) definiert ist, wobei sich wenigstens ein abnehmbarer Behälter (7) im Innern der Einfassung (17) erstreckt, wobei der genannte Behälter (7) derart ausgestaltet ist, dass er Saat, eine Sprühdüse (5), die zum abwechselnden Versprühen von einer Mischung aus Wasser/Luft in Form von Tröpfchen oder nur Luft in der Einfassung (7) ausgestaltet ist, und eine Kontrolleinheit (9) des Keimens der Saat innerhalb des Keimapparats (1), umfassend eine Gruppe aus Modulen, die zum Umsetzen eines Schrittes ausgestaltet ist, der ausgehend von Umgebungsparametern im Keimapparat (1) im Bestimmen von Informationen bezüglich der Menge, des Typs der zu keimenden Saat und ihrer jeweiligen Anordnung innerhalb der Einfassung (17) und ausgehend von Keimparametern des Keimens der in der genannten Einfassung (7) zu keimenden Saat, von Steuerparametern der Sprühdüse (5) derart, dass in der Einfassung (17) eine zum Keimen der Saat geeignete Umgebung erhalten wird, besteht, wobei die genannten Steuerparameter eine Sprühfrequenz der Mischung Wasser/Luft in Form von Tröpfchen und eine Sprühfrequenz von Luft durch die Sprühdüse (5) umfasst, aufnimmt;
**dadurch gekennzeichnet, dass** die Einfassung abgeschlossen ist und die Vorrichtung darüber hinaus umfasst: einen Versorgungskreislauf mit Luft (2) und einen Versorgungskreislauf mit Wasser (3); wobei die Sprühdüse (5) einerseits mit einem Teil des Versorgungskreislaufs mit Luft (2) und andererseits mit einem Versorgungskreislauf mit Wasser (3) verbunden ist, wobei diese Düse (5) derart angeordnet ist, dass ein Abschnitt der Düse (5) sich innerhalb der Einfassung (17) erstreckt und derart, dass abwechselnd eine Mischung Luft/Wasser oder nur Luft an der oberen Oberfläche des Aufnahmeraums des Behälters versprüht wird.

2. Steuerverfahren (E) zum Keimen von Saat innerhalb eines Keimapparats (1) gemäß Anspruch 1, das einen Schritt umfasst, der darin besteht, ausgehend von Umgebungsparametern im Keimapparat (1) Informationen über die Menge, den Typ der zu keimenden Körner und deren jeweilige Anordnung innerhalb der Einfassung (17) und von Keimparametern des Keimens der in der genannten Einfassung (7) zu keimenden Saat, von Steuerparametern der Sprühdüse (5) derart zu bestimmen, dass in der Einfassung (17) eine zum Keimen der Saat geeignete Umgebung erhalten wird, wobei die genannten Steuerparameter eine Sprühfrequenz der Mischung Wasser/Luft in Form von Tröpfchen und eine Sprühfrequenz der Luft durch die Sprühdüse (5) umfassen.

3. Verfahren (E) gemäß Anspruch 2, bei dem die bestimmten Steuerparameter ebenfalls die Dauer jeweils jedes Versprühens der Mischung Wasser/Luft und jedes Versprühens von Luft umfassen.

4. Verfahren (E) gemäß irgendeinem der Ansprüche 2 oder 3, bei dem die bestimmten Steuerparameter ebenfalls eine Einstellung der Sprühdüse (5) derart umfassen, dass die Größe der versprühten Tröpfchen bestimmt wird.

5. Verfahren (E) gemäß irgendeinem der Ansprüche 2 bis 4, bei dem die Keimparameter die Temperatur und die Hygrometrie im Innern der Einfassung (17) umfassen.

6. Verfahren (E) gemäß irgendeinem der Ansprüche 2 bis 5, bei dem die Umgebungsparameter im Keimapparat (1) die Feuchtigkeitsdichte und die Temperatur im Außenbereich des Keimapparats (1) umfassen.

7. Verfahren (E) gemäß einem der Ansprüche 2 bis 6, bei dem der Keimapparat (1) mehrere Behälter (7) umfasst und die Information über die Menge an zu keimender Saat die Größe der Einfassung (17), die Anzahl von Behältern (7) und die Fläche jedes Behälters (7) umfasst.

8. Verfahren (E) gemäß einem der Ansprüche 2 bis 7, umfassend darüber hinaus einen Steuerschritt des Keimzustandes der Saat.

## Claims

1. Device for gemination of seed, or germinator (1), comprising: a chamber (17) defined by walls (10, 11, 12, 13, 14, 15), at least one removable tray (7) extending inside the chamber (17), said tray (7) being configured to accommodate seeds, a spray nozzle (5) configured to alternately disperse in the chamber (17), a water-air mixture as droplets, or air only, a control unit (9) of the germination of the seed within the germinator configured to implement a step consisting in determining, from ambient parameters of the germinator (1), information relating to the amount, type of seeds to be germinated, and their respective location within the chamber (17), and from germination parameters specific to germination of seeds to be germinated in said chamber (17), parameters for controlling the spray nozzle (5) so as to obtain, in the chamber (17), an environment conducive to germination of seeds, said controlled parameters comprising a frequency of dispersion, through the spray nozzle (5), the water-air mixture as droplets, and a frequency of dispersion of air;
**characterized in that** the chamber is confined and **in that** the device comprises, furthermore : an air supply circuit (2), a water supply circuit (3), the spray nozzle (5) being connected on the one hand to the air supply circuit (2), and on the other hand to the water supply circuit (3), the nozzle (5) being disposed so that a portion of the nozzle (5) extends within the chamber (17) and so as to alternately disperse an air-water mixture, or air only, at the upper surface of the receptacle space of the tray (7).

2. Method for controlling the germinations or seed within a germinator (1) according to claim 1, comprising a step consisting in determining, from ambient parameters of the germinator (1), information relating to the amount, type of seeds to be germinated, and their respective location within the chamber (17), and from germination parameters specific to germination of seeds to be germinated in said chamber (17), parameters for controlling the spray nozzle (5) so as to obtain, in the chamber (17), an environment conducive to germination of seeds, said controlled parameters comprising a frequency of dispersion, through the spray nozzle (5), the water-air mixture as droplets, and a frequency of dispersion of air.

3. Method (E) according to claim 2, wherein, the determined controlled parameters also comprise the duration of each dispersion of the water-air mixture, and of each dispersion of air, respectively.

4. Method (E) according to one of claims 2 or 3, wherein the determined controlled parameters also comprise a setting of the spray nozzle (5) so as to determine the size of dispersed droplets.

5. Method (E) according to one of claims 2 to 4; wherein the germination parameters comprise the temperature and hygrometry inside the chamber (17).

6. Method (E) according to one of claims 2 to 5, wherein the ambient parameters in the germinator (1) comprise a humidity density and temperature outside the germinator (1).

7. Method (E) according to one of claims 2 to 6, wherein the germinator (1) comprises several trays (7), and the information relating to the amount of seeds to be germinated comprises the size of the chamber (17), the number of trays (7) and the surface area of each tray (7).

8. Method (E) according to one of claims 2 to 7, further comprising a step of controlling the germination state of the seeds.
